Europäisches Patentamt

European Patent Office

Office européen des brevets

(19)

(11) EP 0 591 367 B1

(12) FASCICULE DE BREVET EUROPEEN

(45) Date de publication et mention
de la délivrance du brevet:
30.07.1997 Bulletin 1997/31

(21) Numéro de dépôt: 92913869.1

(22) Date de dépôt: 24.06.1992

(51) Int. Cl.⁶: A23N 15/04

(86) Numéro de dépôt international:
PCT/FR92/00571

(87) Numéro de publication internationale:
WO 93/00022 (07.01.1993 Gazette 1993/02)

(54) **INSTALLATION DE COUPE AUTOMATIQUE DE PIEDS DE CHAMPIGNONS**

ANLAGE ZUM AUTOMATISCHEN SCHNEIDEN VON PILZSTIELEN

DEVICE FOR AUTOMATIC CUTTING OF MUSHROOM STEMS

(84) Etats contractants désignés:
BE DE ES FR GB IT NL

(30) Priorité: 25.06.1991 FR 9107782

(43) Date de publication de la demande:
13.04.1994 Bulletin 1994/15

(73) Titulaires:
• S.A. ROYAL CHAMPIGNON
49427 Saumur Cédex (FR)
Etats contractants désignés:
BE DE ES FR GB IT NL

• ROBOLIX S.A.
F-32430 Cologne (FR)
Etats contractants désignés:
FR

(72) Inventeur: MEULNART, Alain
F-75016 Paris (FR)

(74) Mandataire: Warcoin, Jacques et al
Cabinet Régimbeau,
26, avenue Kléber
75116 Paris (FR)

(56) Documents cités:
FR-A- 2 038 068          FR-A- 2 161 405
FR-A- 2 595 589          US-A- 4 198 903
US-A- 4 457 434

## Description

La présente invention concerne une installation de coupe automatique de pieds de champignons, comprenant des moyens de transport aptes à amener lesdits champignons à un poste de coupe comportant un organe de coupe destiné à parer individuellement les champignons.

L'invention trouve une application particulièrement avantageuse dans le domaine du parage des champignons de couche, ou champignons de Paris, notamment avant leur mise en conserve.

D'une manière générale, l'opération de coupe des pieds de champignons, appelée aussi parage, a pour but d'éliminer sous forme de déchets les extrémités des pieds sur lesquels subsistent des résidus de culture tels que terre, compost ou filaments mycéliens.

On connaît du document FR-A-2 038 068 par exemple une installation de coupe automatique de pieds de champignons conforme au préambule dans laquelle des moyens de transport constitués par deux courroies sensiblement parallèles acheminent les champignons vers un organe de coupe dont la position par rapport aux courroies est fixe.

L'inconvénient de ce type d'installation connue est que, la taille des pieds de champignons étant très variable en fonction de leur origine, la hauteur de coupe n'est pas toujours optimale. En particulier, pour les champignons dont les pieds sont très longs, une quantité importante de matière est perdue, tandis que les pieds des champignons les plus courts peuvent échapper à la coupe, donnant en sortie de l'installation des champignons non parés qu'il faut alors séparer manuellement.

Pour remédier à cet inconvénient, il est parfois prévu de soumettre les champignons à un tri préalable pour ne retenir que ceux d'entre eux pour lesquels la coupe du pied puisse s'effectuer à hauteur convenable. Les champignons non conformes au tri initial sont rejetés. Toutefois, cette technique exige une opération supplémentaire nuisible à la productivité de l'installation.

Aussi, le problème technique à résoudre par l'objet de la présente invention est de réaliser une installation de coupe automatique de pieds de champignons conforme au préambule qui permettrait d'obtenir un gain de matière en raison de l'optimisation de la hauteur du déchet coupé, ainsi qu'un gain de productivité en raison de la suppression des postes de tri.

La solution au problème technique posé consiste, selon la présente invention, en ce que ledit poste (100) de coupe comporte également, d'une part un dispositif optique (110) de reconnaissance de forme du champignon apte à fournir un signal de commande représentatif de la longueur exacte (ho) du pied (11) de chaque champignon (10) et, d'autre part, des moyens (130) de commande aptes à ajuster de façon précise et continue la position relative de l'organe (120) de coupe et du pied (11) de champignon en fonction du signal de commande délivré par le dispositif optique de reconnaissance de forme (110), sans risque d'erreurs causées par la présence éventuelle de filaments mycéliens prolongeant le pied du champignon, et en ce que lesdits moyens (21, 22, 31, 32) de transport comportent des moyens (51, 52, 61, 62) de séparation aptes à imposer une séparation des champignons (10) avant leur arrivée audit poste (100), en provoquant une accélération des champignons par passage d'un jeu de courroies amont (31, 32) animées d'une vitesse $V_1$ à un jeu de courroies aval (21, 22) animées d'une vitesse $V_2$ supérieure à $V_1$.

Ainsi, il est possible de couper les pieds des champignons a une hauteur adaptée à chaque champignon pris individuellement de façon à limiter la coupe au seul déchet sans perte de matière. La position relative organe de coupe/champignon étant ajustable, il est inutile de trier les champignons en fonction de la longueur de leur pied, d'où le gain de productivité recherché.

Selon un premier mode de réalisation de l'installation de l'invention, lesdits moyens de détection comprennent un dispositif à télémétrie infrarouge.

Dans un deuxième mode de réalisation de l'installation selon l'invention, lesdits moyens de détection comprennent un dispositif optique de reconnaissance de forme apte à fournir auxdits moyens de commande un signal de commande représentatif de la longueur du pied de chaque champignon. En particulier, il est prévu que ladite pluralité de récepteurs constitue un dispositif d'enregistrement vidéo. Il est également envisagé que ledit dispositif optique de reconnaissance de forme comprend, d'une part, au moins un émetteur de rayonnement et, d'autre part, en regard dudit émetteur, au moins une pluralité de récepteurs dudit rayonnement, ledit émetteur et ladite pluralité des récepteurs étant disposés sur le trajet des champignons de façon qu'au cours du transport, les pieds desdits champignons interceptent ledit rayonnement.

La description qui va suivre en regard des dessins annexés, donnés à titre d'exemples non limitatifs, fera bien comprendre en quoi consiste l'invention et comment elle peut être réalisée.

La figure 1 est une vue de côté d'une installation de coupe automatique de pieds de champignons conforme à l'invention.

La figure 2 est une vue de dessus de l'installation de la figure 1.

La figure 3 est une vue de côté d'un premier mode de réalisation d'un moyen de détection de l'invention.

La figure 4 est une vue de côté d'un deuxième mode de réalisation d'un moyen de détection de l'invention.

La figure 5 est une coupe selon la ligne D-D de la figure 2 d'un troisième mode de réalisation d'un moyen de détection de l'invention.

La figure 6 est un schéma en perspective d'un poste de coupe mettant en oeuvre le moyen de détection de la figure 5.

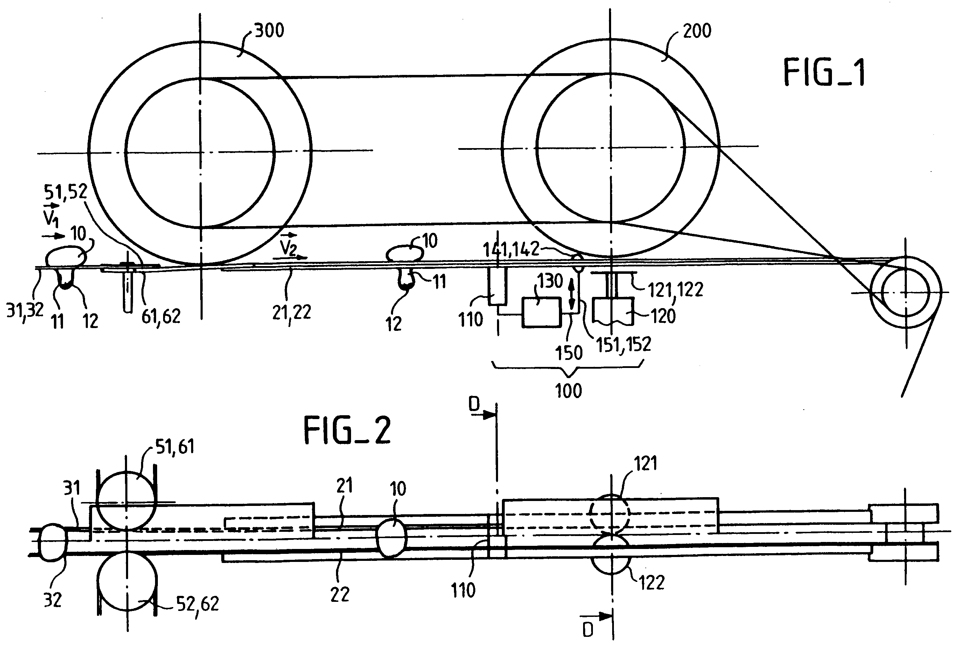

Les figures 1 et 2 montrent une installation de coupe automatique de pieds 11 de champignons 10. Ces champignons peuvent être, par exemple, des champignons de couche ou champignons de Paris.

Comme l'indique la figure 1, les pieds 11 de ces champignons présentent à leur extrémité un déchet 12 constitué par des résidus de culture tels que terre, compost ou filaments mycéliens. Bien évidemment, ce déchet 12 doit être éliminé avant que le champignon ne soit traité pour être mis en conserve par exemple.

La coupe des déchets 12 est réalisée à l'aide de l'installation montrée aux figures 1 et 2. Cette installation comporte des moyens de transport comprenant une paire de courroies parallèles 21, 22 venant pincer les champignons 10 dans une direction verticale. Les courroies 21, 22 sont animées d'un mouvement longitudinal qui amène les champignons 10 à un poste 100 de coupe comportant un organe 120 de coupe destiné à parer individuellement les champignons et qui, dans l'exemple des figures 1 et 2, est composé de deux scies circulaires 121, 122. Il est essentiel de rappeler ici que l'organe 120 de coupe est, pour chaque ligne de traitement, un outil unique, c'est-à-dire présentant un seul plan de coupe dont la position relative par rapport au champignon peut être réglée de façon précise, en continu.

Comme l'indique la figure 1, le poste 100 de coupe comporte également, d'une part, des moyens 110 de détection aptes à déterminer individuellement la longueur ho du pied 11 de chaque champignon 10, et, d'autre part, des moyens 130 de commande aptes à ajuster la position relative de l'organe 120 de coupe et du pied 11 de champignon en fonction de la longueur du pied déterminée par lesdits moyens 110 de détection.

Dans le mode de réalisation décrit, l'organe 120 de coupe est fixe et les moyens 130 de commande sont aptes à régler la position des pieds de champignons par rapport à l'organe de coupe par l'intermédiaire de deux oeillets 141, 142 respectivement enfilés sur les courroies 21 et 22 et reliés par deux câbles 151, 152 à un bras 150 de levier mobile.

Ainsi, pour chaque champignon, la hauteur h de coupe peut être réglée à une valeur ho-d, d étant la longueur des déchets à couper, et ceci quelle que soit la hauteur ho du pied du champignon considéré. Ce résultat représente un avantage important de l'invention car, malgré la forte dispersion de ho qui peut varier de 5 à 60 mm, il est possible d'obtenir, sans tri préalable, un parage parfait des champignons limitant la quantité de matière perdue et évitant tout reliquat de résidus de culture sur le pied coupé.

On notera qu'au moment de la coupe les champignons sont maintenus en position grâce à un premier rouleau presseur 200 en mousse par exemple.

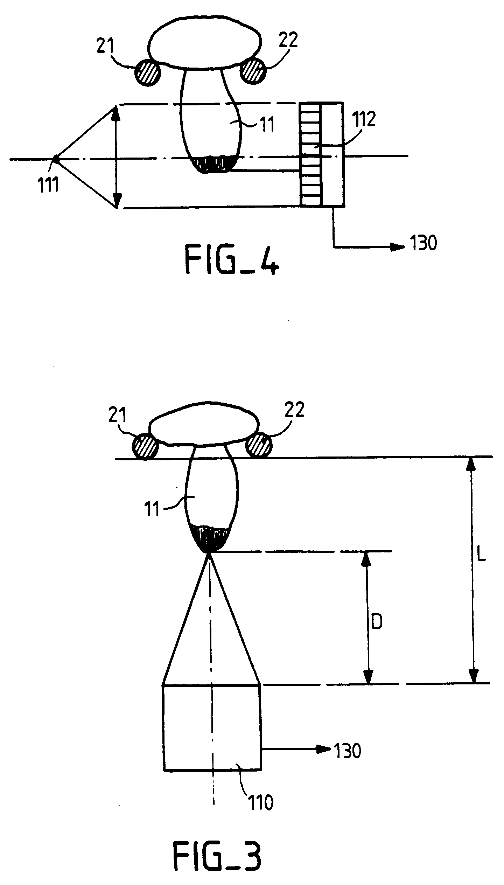

La figure 3 montre un premier mode de réalisation de l'invention dans lequel les moyens 110 de détection comprennent un dispositif de télémétrie infrarouge permettant de mesurer la distance D entre l'extrémité du pied des champignons et un plan de référence fixe lié audit dispositif de télémétrie infrarouge. La distance L entre le plan fixe et le plan des courroies 21, 22 étant connue, on en déduit la hauteur ho du pied 11 des champignons par

$$ho = L - D$$

La figure 4 illustre un autre mode de réalisation de l'invention dans lequel lesdits moyens 110 de détection comprennent un dispositif optique de reconnaissance de forme apte à fournir auxdits moyens 130 de commande un signal représentatif de la longueur ho du pied de chaque champignon. Le dispositif optique montré sur la figure 4 comprend un émetteur 111 de rayonnement en regard duquel est placée une pluralité de détecteurs 112 formant un dispositif d'enregistrement vidéo, une caméra à éléments à transfert de charge (CCD) par exemple. Ce dispositif d'enregistrement vidéo reçoit l'ombre des pieds de champignons lorsqu'ils sont éclairés par l'émetteur 111, associé éventuellement à une optique de projection. L'émetteur 111 et la pluralité de récepteurs 112 sont disposés sur le trajet des champignons de façon qu'au cours du transport les pieds 11 desdits champignons interceptent ledit rayonnement.

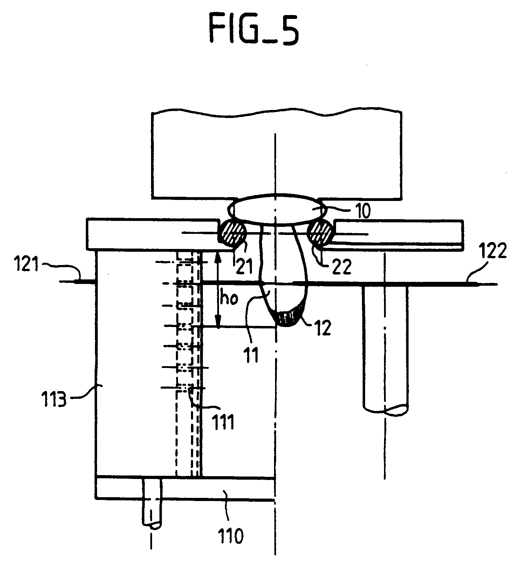

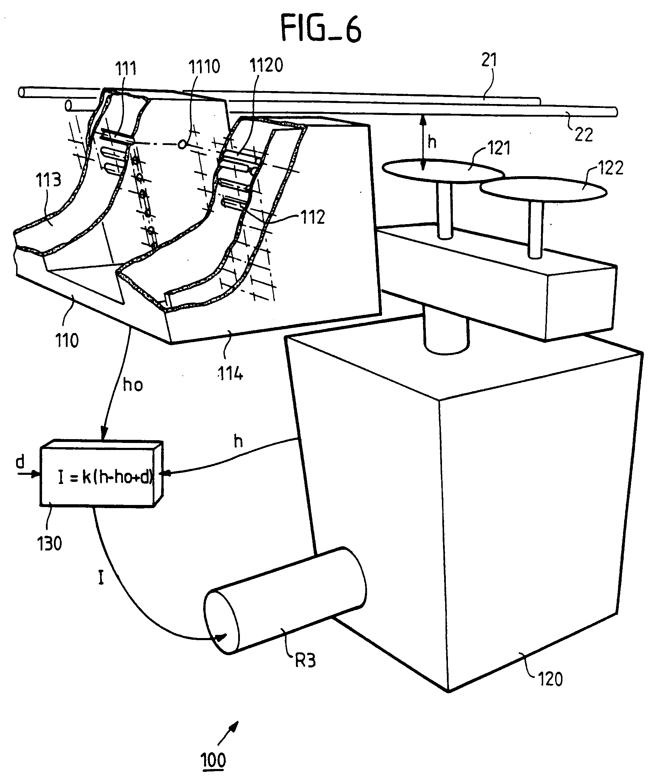

Les figures 5 et 6 illustrent un autre mode de réalisation d'un dispositif optique de reconnaissance de forme apte à fournir auxdits moyens 130 de commande un signal représentatif de la longueur ho du pied de chaque champignon. Dans le mode de réalisation montré aux figures 5 et 6, ce dispositif optique de reconnaissance de forme est constitué par un étrier optique, comprenant, sur une première branche 113, une pluralité d'émetteurs 111 de rayonnement et, en regard des émetteurs 111, une pluralité de récepteurs 112 dudit rayonnement alignés le long d'une deuxième branche 114 de l'étrier, ledit étrier optique étant disposé sur le trajet des champignons 10 de façon qu'au cours du transport les pieds 11 desdits champignons circulent entre les branches 113, 114 de l'étrier et interceptent ledit rayonnement.

Les émetteurs 111 de rayonnement peuvent être des diodes électroluminescentes associées par exemple à des photodiodes ou des phototransistors comme récepteurs 112 de rayonnement. A titre d'exemple, l'étrier optique 110 peut comporter sur chaque branche une barrière d'émetteurs, respectivement de récepteurs, de 45 mm de hauteur séparés de 5 mm.

Conformément au schéma de la figure 6, le signal issu de l'étrier optique 110, représentatif de la hauteur ho des pieds de champignons, est appliqué aux moyens 130 de commande qui reçoivent, en outre, un signal de décalage proportionnel à la hauteur d de déchet à couper et un signal provenant d'un capteur de position non représenté, représentatif de la position h de l'organe 120 de coupe.

Selon un mode de réalisation de l'invention dans lequel les moyens de commande sont aptes à régler la position de l'organe de coupe par rapport aux pieds de champignons, ces divers signaux sont traités par les moyens 130 de commande de façon à fournir à un moteur 123 d'entraînement en hauteur de l'organe de coupe un signal s d'asservissement de la forme

$$s = k ( h - ho + d )$$

k étant une constante dépendant de la boucle d'asservissement.

Le moteur 123 entraîne alors l'organe 120 de coupe dans l'un ou l'autre sens jusqu'à ce que le signal s s'annule, c'est-à-dire quand la hauteur h de coupe est égale à ho - d.

Si l'on désire mesurer la vitesse de défilement des champignons, il est prévu que l'étrier optique comporte un émetteur 1110 et un récepteur 1120 de rayonnement supplémentaires qui sont, de préférence, situés à la hauteur des émetteur et récepteur du haut des barrières d'émetteurs et de récepteurs, à une distance de 50 mm par exemple de ces dernières. Pour déterminer la vitesse, il suffit d'intégrer le temps mis par le champignon pour parcourir ces 50 mm.

La connaissance de la vitesse de défilement permet d'éliminer les erreurs causées par les filaments mycéliens qui pourraient être interprétés comme des pieds de champignons. En mesurant le temps de passage de l'ombre du pied au niveau de chaque récepteur, et en multipliant ce temps de passage par la vitesse de défilement, on détermine la dimension du pied dans le sens du défilement. Si cette dimension est inférieure par exemple à 3 mm, le passage par zéro du signal photoélectrique du récepteur correspondant n'est pas pris en compte.

L'influence des filaments mycéliens peut également être éliminée en utilisant des mosaïques homologues d'émetteurs et de récepteurs comportant par exemple deux barrières de transducteurs translatées l'une de l'autre de 3 mm par exemple. Si au passage des champignons les deux récepteurs situés à une même hauteur n'émettent pas simultanément un signal photoélectrique nul, le passage par zéro de l'un et l'autre des signaux photoélectriques n'est pas pris en compte.

La mosaïque peut être plus complexe et comporter des barrières de transducteurs en quinconce, avec l'avantage d'augmenter la résolution des moyens de détection.

Selon un mode de mise en oeuvre particulier, l'étrier optique 110 est réalisé en matière plastique. Les émetteurs et les récepteurs sont respectivement protégés par une lame de verre collée, non représentée, sur laquelle un jet d'air laminaire est positionné dans le but d'éliminer l'eau et les particules provenant des champignons. L'étanchéité de l'étrier doit être parfaite pour éviter toute condensation devant un émetteur ou récepteur.

De façon à tenir compte du fait que l'organe de coupe, tel que les scies circulaires 121, 122, peut présenter une dimension non négligeable dans la direction du mouvement des champignons, il est prévu que les moyens de transport des champignons comportent des moyens de séparation aptes à imposer une séparation des champignons avant leur passage dans l'organe de coupe. Cette séparation doit être suffisante pour permettre aux scies circulaires par exemple, de se déplacer entre deux pieds de champignons consécutifs.

Comme l'illustrent les figures 1 et 2, une telle séparation peut être obtenue en faisant subir aux champignons une accélération au passage d'une paire amont de courroies 31, 32 animées d'une vitesse $V_1$ par entraînement à l'aide d'un premier jeu de poulies 51, 52, à la paire aval des courroies 21, 22 dont la vitesse $V_2$ supérieure à $V_1$ est communiquée par l'intermédiaire d'un deuxième jeu de poulies 61, 62. Si deux champignons sont séparés initialement de la distance $d_1$, ils présenteront au niveau de l'organe 120 de coupe une séparation $d_2$ donnée par :

$$d_2 = d_1 \, V_2 \, / \, V_1 \, .$$

Au moment du passage d'une paire de courroies à l'autre, les champignons sont maintenus en position par un deuxième rouleau presseur 300.

On notera que la nature particulière des organes de coupe décrits ici n'est nullement restrictive. Ces organes de coupe peuvent par exemple être également réalisés sous la forme d'une lame de scie, d'un fil froid ou chaud, animes ou non d'un mouvement de défilement, d'air haute pression, d'un jet d'eau, d'un laser ou analogue.

Du fait, par exemple, d'un débit important des champignons, il peut se produire que le pied d'un champignon donné, dont la longueur a été déterminée par les moyens de détection, n'est pas immédiatement coupé par l'organe de coupe, mais seulement après que les n-1 champignons précédents aient été parés. Dans ce cas, on prévoit que lesdits moyens 130 de commande comportent des moyens de mémorisation des longueurs des n derniers champignons, déterminées par les moyens 110 de détection. Ces moyens de mémorisation peuvent être par exemple constitués par un registre à décalage qui s'incrémente d'une position après chaque passage d'un champignon dans l'organe de coupe. Ainsi, un champignon donné sera toujours paré à la hauteur convenable, même en temps différé.

Il est également possible que deux champignons de hauteur différente soient trop rapprochés pour être parés séparément du fait notamment d'un temps de réponse trop long de l'organe de coupe. Pour remédier à cette situation, il est prévu que lesdits moyens 130 de commande comportent des moyens aptes à ajuster la position relative de l'organe 120 de coupe et des pieds de champignons consécutifs rapprochés, en fonction de la longueur de pied déterminée pour le champignon le plus court. De cette manière, il est assuré que les deux champignons seront correctement parés.

Il convient aussi de noter que, dans le mode de réalisation décrit, le champignon est présenté aux moyens de détection dans une position "pied en bas". Cependant il est parfaitement possible d'imaginer le champignon amené dans une autre position, par exemple "pied en haut". Dans ces conditions, le système devrait être simplement renversé.

Enfin, d'autres moyens de détection que ceux précédemment décrits peuvent être envisagés, tels qu'un dispositif échographique.

**Revendications**

1. Installation de coupe automatique de pieds (11) de champignons (10) comprenant des moyens (21, 22, 31, 32) de transport aptes à amener lesdits champignons (10) à un poste (100) de coupe comportant un organe (120) de coupe destiné à parer individuellement les champignons, ledit poste (100) de coupe comportant également, un dispositif optique (110) de reconnaissance de forme du champignon apte à fournir un signal de commande représentatif de la longueur du pied (11) de chaque champignon (10), caractérisée en ce que d'une part le dispositif optique est apte à fournir un signal représentatif de la longueur exacte (ho) du pied et, d'autre part, des moyens (130) de commande sont aptes à ajuster de façon précise et continue la position relative de l'organe (120) de coupe et du pied (11) de champignon en fonction du signal de commande délivré par le dispositif optique de reconnaissance de forme (110), sans risque d'erreurs causées par la présence éventuelle de filaments mycéliens prolongeant le pied du champignon, et en ce que lesdits moyens (21, 22, 31, 32) de transport comportent des moyens (51, 52, 61, 62) de séparation aptes à imposer une séparation des champignons (10) avant leur arrivée audit poste (100), en provoquant une accélération des champignons par passage d'un jeu de courroies amont (31, 32) animées d'une vitesse $V_1$ à un jeu de courroies aval (21, 22) animées d'une vitesse $V_2$ supérieure à $V_1$.

2. Installation selon la revendication 1, caractérisée en ce que lesdits moyens (130) de commande sont aptes à régler la position des pieds (11) de champignons par rapport à l'organe (120) de coupe.

3. Installation selon l'une des revendications 1 et 2, caractérisée en ce que lesdits moyens (130) de commande sont aptes à régler la position de l'organe (120) de coupe par rapport aux pieds (11) de champignons.

4. Installation selon la revendication 3, caractérisée en ce que ledit dispositif optique (110) de reconnaissance de forme comprend, d'une part, au moins un émetteur (111) de rayonnement et, d'autre part, en regard dudit émetteur, au moins une pluralité de récepteurs (112) dudit rayonnement, ledit émetteur et ladite pluralité de récepteurs étant disposés sur le trajet des champignons (10) de façon qu'au cours du transport, les pieds (11) desdits champignons interceptent ledit rayonnement.

5. Installation selon la revendication 4, caractérisée en ce que ladite pluralité de récepteurs (112) constitue un dispositif d'enregistrement vidéo.

6. Installation selon la revendication 4, caractérisée en ce que ledit dispositif optique (110) de reconnaissance de forme est constitué par un étrier optique comprenant, sur une première branche (113) ledit émetteur (111) et, sur une deuxième branche, ladite pluralité de récepteurs (112).

7. Installation selon la revendication 6, caractérisée en ce que ledit dispositif optique (110) comporte un émetteur (1110) et un récepteur (1120) supplémentaires destinés à mesurer la vitesse de défilement des champignons.

8. Installation selon l'une des revendications 6 ou 7, caractérisée en ce que ledit dispositif optique (110) comprend une mosaïque d'émetteurs (111) de rayonnement placée en regard d'une mosaïque homologue de récepteurs (112) dudit rayonnement.

9. Installation selon la revendication 8, caractérisée en ce que la mosaïque d'émetteur (111) et/ou la mosaïque analogue de récepteur (112) comporte(nt) des barrières de transducteurs en quinconce.

10. Installation selon l'une quelconque des revendications 6 à 9, caractérisée en ce que le(s)dit(s) émetteur(s) (111) et lesdits récepteurs (112) sont respectivement protégés par une lame de verre balayée par un jet d'air.

11. Installation selon l'une quelconque des revendications 1 à 10, caractérisée en ce que lesdits moyens (130) de commande comportent des moyens de mémorisation des longueurs des n derniers champignons, déterminées par les moyens (110) de détection.

12. Installation selon l'une quelconque des revendications 1 à 11, caractérisée en ce que lesdits moyens (130) de commande comportent des moyens aptes à ajuster la position relative de l'organe (120) de coupe et des pieds de deux des champignons consécutifs rapprochés, en fonction de la longueur de pied déterminée pour le champignon le plus court.

**Claims**

1. Installation for the automatic cutting of mushroom (10) stems (11), comprising conveying means (21, 22, 31, 32) capable of bringing the said mushrooms (10) to a cutting station (100) comprising a cutting device (120) intended to trim the mushrooms individually, the said cutting station (100) also comprising an optical device (110) for recognising the shape of the mushroom capable of supplying a control signal representing the exact length of the stem (11) of each mushroom (10), characterized in that, on the one hand, the optical device is capable of supplying a signal representing the exact length (ho) of the stem, and, on the other hand, control means (130) are capable of accurately and continuously adjusting the relative position of the cutting device (120) and of the mushroom stem (11) as a function of the control signal supplied by the optical shape recognition device (110), without risk of errors caused by the possible presence of mycelian fibres extending the mushroom stem, and in that the said conveying means (21, 22, 31, 32) comprise separating means (51, 52, 61, 62) capable of imposing a separation of the mushrooms (10) before their arrival at the said station (100), causing the mushrooms to accelerate by passing from an upstream set of belts (31, 32) moving with a speed $V_1$ to a downstream set of belts (21, 22) moving with a speed $V_2$ which is greater than $V_1$.

2. Installation according to Claim 1, characterised in that the said control means (130) are capable of adjusting the position of the mushroom stems (11) with respect to the cutting device (120).

3. Installation according to either of Claims 1 and 2, characterised in that the said control means (130) are capable of adjusting the position of the cutting device (120) with respect to the mushroom stems (11).

4. Installation according to Claim 3, characterised in that the said optical shape recognition-device (110) comprises, on the one hand, at least one radiation transmitter (111) and, on the other hand, facing the said transmitter, at least one plurality of receivers (112) of the said radiation, the said transmitter and the said plurality of receivers being disposed on the path of the mushrooms (10) in such a way that, during conveying, the stems (11) of the said mushrooms intercept the said radiation.

5. Installation according to Claim 4, characterised in that the said plurality of receivers (112) constitutes a video recording device.

6. Installation according to Claim 4, characterised in that the said optical shape recognition device (110) is constituted by an optical fork comprising, on a first branch (113), the said transmitter (111) and, on a second branch, the said plurality of receivers (112).

7. Installation according to Claim 6, characterised in that the said optical device (110) comprises an additional transmitter (1110) and an additional receiver (1120) intended for measuring the speed of progression of the mushrooms.

8. Installation according to either one of Claims 6 and 7, characterised in that the said optical device (110) comprises an array of radiation transmitters (111) placed facing a homologous array of receivers (112) of the said radiation.

9. Installation according to Claim 8, characterised in that the transmitter array (111) and/or the similar receiver array (112) comprise(s) barriers of staggered transducers.

10. Installation according to any one of Claims 6 to 9, characterised in that the said transmitter or transmitters (111) and the said receivers (112) are respectively protected by a sheet of glass swept by a jet of air.

11. Installation according to any one of Claims 1 to 10, characterised in that the said control means (130) comprise means of storage of the lengths of the last n mushrooms, determined by the detection means (110).

12. Installation according to any one of Claims 1 to 11, characterised in that the said control means (130) comprise means capable of adjusting the relative position of the cutting device (120) and of the stems of two consecutive mushrooms which are close together, as a function of the length of stem determined for the shortest mushroom.

**Patentansprüche**

1. Anlage zum automatischen Schneiden der Stiele (11) von Pilzen (10), mit Transportmitteln (21, 22, 31, 32), die dazu fähig sind, die Pilze (10) zu einem Schneidestand (100) zu befördern, der ein Schneideorgan (120) aufweist, das dazu bestimmt ist, die Pilze einzeln zuzurichten, wobei der Schneidestand (100) auch eine optische Einrichtung (110) für die Erkennung der Form des Pilzes aufweist, die dazu fähig ist, ein Steuersignal zu liefern, das für die Länge des Stiels (11) eines jeden Pilzes (10) repräsentativ ist, dadurch **gekennzeichnet**, daß zum einen die optische Einrichtung dazu fähig ist, ein Steuersignal zu liefern, das für die genaue Länge (ho) des Stiels repräsentativ ist, und zum anderen Steuermittel (130) dazu Fähig sind, auf genaue und kontinuierliche Weise die relative Position des Schneideorgans (120) und des Pilzstiels (11) in Abhängigkeit von dem Steuersignal, das von der optischen Formerkennungseinrichtung (110) geliefert wird, einzustellen, ohne Fehler zu riskieren, die durch die mögliche Anwesenheit von den Pilzstiel verlängernden Myzelfäden verursacht werden, und daß die Transportmittel (21, 22, 31, 32) Trennmittel (51, 52, 61, 62) aufweisen, die dazu fähig sind, die Pilze (10) vor ihrer Ankunft an dem Stand (100) dadurch zu trennen, daß eine Beschleunigung der Pilze durch den Durchlauf von einem stromaufwärtigen Satz von Riemen (31, 32), die mit einer Geschwindigkeit $V_1$ angetrieben sind, zu einem stromabwärtigen Satz von Riemen (21, 22), die mit einer Geschwindigkeit $V_2$ größer als $V_1$ angetrieben sind, erzwungen wird.

2. Anlage nach Anspruch 1, dadurch **gekennzeichnet**, daß die Steuermittel (130) dazu fähig sind, die Position der Pilzstiele (11) in bezug auf das Schneideorgan (120) zu regeln.

3. Anlage nach einem der Ansprüche 1 oder 2, dadurch **gekennzeichnet**, daß die Steuermittel (130) dazu fähig sind, die Position des Schneideorgans (120) in bezug auf die Pilzstiele (11) zu regeln.

4. Anlage nach Anspruch 3, dadurch **gekennzeichnet**, daß die optische Formerkennungseinrichtung (110) zum einen wenigstens einen Sender (111) für Strahlung und zum anderen wenigstens eine Vielzahl von dem Sender gegenüberliegenden Empfängern (112) für diese Strahlung aufweist, wobei der Sender und die Vielzahl von Empfängern auf der Bahn der Pilze (10) derart angeordnet sind, daß im Verlauf dem Transports die Stiele (11) dieser Pilze die Strahlung unterbrechen.

5. Anlage nach Anspruch 4, dadurch **gekennzeichnet**, daß die Vielzahl von Empfängern (112) eine Videoaufzeichnungsapparat bildet.

6. Anlage nach Anspruch 4, dadurch **gekennzeichnet**, daß die optische Formerkennungseinrichtung (110) aus einem optischen Bügel besteht, der an einem ersten Zweig (113) den Sender (111) und an einem zweiten Zweig die Vielzahl von Empfängern (112) aufweist.

7. Anlage nach Anspruch 6, dadurch **gekennzeichnet**, daß die optische Einrichtung (110) einen zusätzlichen Sender (1110) und einen zusätzlichen Empfänger (1120) aufweist, die dazu bestimmt sind, die Geschwindigkeit des Vorbeilaufens der Pilze zu messen.

8. Anlage nach einem der Ansprüche 6 oder 7, dadurch **gekennzeichnet**, daß die optische Einrichtung (110) ein Mosaik von Sendern (111) für Strahlung aufweist, die einem homologen Mosaik von Empfängern (112) für diese Strahlung gegenüberliegend angeordnet sind.

9. Anlage nach Anspruch 8, dadurch **gekennzeichnet**, daß das Mosaik von Sendern (111) und/oder das analoge Mosaik von Empfängern (112) Barrieren von Meßwandlern in Überkreuzanordnung aufweist (aufweisen).

10. Anlage nach einem der Ansprüche 6 bis 9, dadurch **gekennzeichnet**, daß der (die) Sender (111) und die Empfänger (112) jeweils durch ein Glasplättchen geschützt sind, das von einem Luftstrahl bestrichen wird.

11. Anlage nach einem der Ansprüche 1 bis 10, dadurch **gekennzeichnet**, daß die Steuermittel (130) Mittel zum Speichern der von den Erfassungsmitteln (110) bestimmten Längen der n letzten Pilze aufweisen.

12. Anlage nach einem der Ansprüche 1 bis 11, dadurch **gekennzeichnet**, daß die Steuermittel (130) Mittel aufweisen, die dazu geeignet sind, die relative Position des Schneideorgans (120) und der Stiele von zwei aufeinanderfolgenden benachbarten Pilzen in Abhängigkeit von der für den kürzesten Pilz bestimmten Länge des Stiels einzustellen.

FIG_1

FIG_2

EP 0 591 367 B1

FIG_4

FIG_3

# FIG_5

# FIG_6

$$I = k(h - ho + d)$$